# EUROPÄISCHE PATENTSCHRIFT

(11) **EP 1 474 319 B1**
(45) Veröffentlichungstag und Bekanntmachung des Hinweises auf die Patenterteilung: **27.12.2006**
(21) Anmeldenummer: 02781340.1
(22) Anmeldetag: 03.12.2002
(51) Int. Cl.: B60T 8/44

(54) **VERFAHREN ZUR VERBESSERUNG DES BETRIEBS EINES BREMSSYSTEMS**
METHOD FOR IMPROVING THE OPERATION OF A BRAKING SYSTEM
PROCEDE D'AMELIORATION DU FONCTIONNEMENT D'UN SYSTEME DE FREINAGE

(30) Priorität: 07.02.2002 DE 10205173; 17.10.2002 DE 10248341
(43) Veröffentlichungstag der Anmeldung: 10.11.2004
(73) Patentinhaber: Continental Teves AG & Co. oHG, 60488 Frankfurt (DE)
(72) Erfinder: SCHELLER, Tobias, 65931 Frankfurt am Main (DE); REVIOL, Ralf, 63128 Dietzenbach-Steinberg (DE); GRONAU, Ralph, 35083 Wetter (DE); NEU, Andreas, 76773 Kuhardt (DE)
(86) Internationale Anmeldenummer: PCT/EP2002/013641
(87) Internationale Veröffentlichungsnummer: WO 2003/066404

(56) Entgegenhaltungen:
- EP-A- 0 110 119
- EP-A- 0 841 231
- EP-A- 0 928 730
- WO-A-00/10854
- WO-A-94/27848
- DE-A- 19 963 760
- PATENT ABSTRACTS OF JAPAN vol. 1998, no. 12, 31. Oktober 1998 (1998-10-31) -& JP 10 181575 A (DENSO CORP), 7. Juli 1998 (1998-07-07)

## Beschreibung

Die Erfindung betrifft ein Verfahren zur Verbesserung des Betriebs eines hydraulischen Fahrzeugbremssystems mit einer aktiven hydraulischen Bremskraftunterstützung, die zwischen einem Trennventil und Radbremsen des Fahrzeugs an einer Verbindung zwischen einem Hauptbremszylinder und den Radbremsen angeschlossen ist, wobei ein Druckmittel-Volumenstrom zwischen dem Hauptbremszylinder und den Radbremsen mit einem analogen oder analogisierten Trennventils geregelt wird und ein hydraulischer Druck in dem Hauptbremszylinder ermittelt wird, wobei bei einem Übergang einer Druckaufbau-Schaltstellung, das heißt einer geschlossenen Schaltstellung, des Trennventils zu einer Druckabbau-Schaltstellung, das heißt einer geöffneten Schaltstellung, ein Anstieg des hydraulischen Drucks in dem Hauptbremszylinder auf Grundlage des ermittelten hydraulischen Drucks in dem Hauptbremszylinder überwacht und/oder geregelt wird.

Ein derartiges Verfahren ist beispielsweise aus der JP 10 181575 bekannt. Bei dem vorbekannten Verfahren werden Ventile in Abhängigkeit vom Haupt- und Radbremszylinderdruck bzw. von der Druckdifferenz, welche durch Drucksensoren gemessen wird, gepulst betrieben um große Druckschwankungen und Bremspedalrückwirkungen zu vermeiden.

Die Unterdruckversorgung für den Unterdruckbremskraftverstärker erfolgt in der Regel von einem Antriebsmotor (Verbrennungsmotor). Ist die maximal erreichbare Unterstützungskraft durch eine nur schwache Unterdruckversorgung zu gering, was im Zuge neuer Motorentechnik, wie z.B. Benzin-Direkteinspritzer oder Dieselmotoren immer stärker der Fall ist, dann wird eine zusätzliche Bremskraftunterstützung erforderlich.

Eine Möglichkeit zur Erzeugung einer zusätzlichen Bremskraft bzw. eines Zusatz-Bremsdrucks ist der Einsatz einer "aktiven" hydraulischen Bremskraftunterstützung. Dies wird z.B. mittels einer hydraulischen Pumpe erreicht. Der hydraulische Druck, der im hydraulischen Hauptbremszylinder aus der vom Fahrer über das Bremspedal eingesteuerten, mittels Unterdruckbremskraftverstärker verstärkten Bremskraft resultiert, wird dabei von der hydraulischen Pumpe zusätzlich erhöht. Diese Pumpe wird von einem Elektromotor angetrieben, der von einer elektronischen Bremsenregelungseinheit angesteuert wird. In einer Verbindungsleitung zwischen dem Hauptbremszylinder und den Radbremsen ist ein ansteuerbares Trennventil angeordnet, zwecks Regelung bzw. Steuerung des Bremsdrucks.

Es ist bekannt, diese Ventile als analoge oder analogisierte Ventile auszuführen, wodurch neben einer geöffneten und geschlossenen Schaltstellung auch Zwischenstellungen einstellbar sind. Damit ist es möglich, einen bestimmten Volumenstrom durch diese Ventile einzustellen.

Bei derartigen Systemen ist es notwendig, die Ventilkennlinien der Trennventile zu kennen, da der Pedalkomfort davon abhängt. Stimmt eine abgelegte Kennlinie nicht mit der tatsächlichen Kennlinie überein, kann es beim Übergang vom geschlossenen Ventil zum teilweise geöffneten (analogen) Ventil zu einer zu großen Ventilöffnung kommen. Daraus resultiert ein zu großer Volumenstrom durch das Ventil, was vom Fahrer am Bremspedal gespürt werden kann. Ist ein Volumenstrom in Richtung Hauptbremszylinder sehr groß, kann es in Folge eines Druckanstiegs im Hauptbremszylinder sogar zu einer Fehlinterpretation des Fahrerwunsches führen. Es kann dann ungerechtfertigt ein Druckaufbau eingeleitet werden. Auch dies wird ebenfalls vom Fahrer registriert. Er spürt ein Wegbewegung, ein "Wegsaugen" des Pedals, infolge des fälschlich eingeleiteten Druckaufbaus. Diese Situation kann auch mehrmals während eines Lösens des Bremspedals auftreten. In diesen schwingenden Modulationen ist der negative Effekt besonders deutlich spürbar, da eine erste Fehlerregelung auch eine nächste Fehlerregelung verursacht.

Aufgabe der Erfindung ist es, das eingangs genannte Verfahren zum Betrieb eines hydraulischen Fahrzeugbremssystems mit einer aktiven hydraulischen Bremskraftunterstützung derart weiterzubilden, dass der Betätigungskomfort für den Fahrer verbessert wird.

Die Aufgabe wird erfindungsgemäß gelöst durch die Merkmale des unabhängigen Patentanspruchs.

Besonders vorteilhafte Weiterbildungen und Ausgestaltungen der Erfindung sind in den abhängigen Unteransprüchen angegeben.

Erfindungsgemäß ist es vorgesehen, dass der Übergang der geschlossenen Schaltstellung des Trennventils zu der geöffneten Schaltstellung nach einer vorgegebenen Funktion erfolgt, die nach Maßgabe eines im wesentlichen ungefilterten Werts für den hydraulischen Druck im Hauptbremszylinder veränderbar ist, wobei die vorgegebene Funktion für den Übergang der geschlossenen Schaltstellung des Trennventils zu der geöffneten Schaltstellung eine Sprungfunktion mit anschließender Rampe ist, mittels der die Stromstärke zur Ansteuerung des analogen oder analogisierten Trennventils gesteuert wird.

Ein analoges bzw. analogisiertes Ventil kann mittels einer elektrischen bzw. elektronischen Fremdansteuerung alle Stellungen zwischen AUF und ZU einnehmen, so dass der Bremsdruck für Regel- oder Komfortbremsungen stufenlos erhöht oder vermindert werden kann. Bevorzugt wird das analoge bzw. analogisierte Ventil mit einem Stromwert bzw. eine bestimmte Stromstärke eingestellt.

Der Hauptbremszylinder ist bevorzugt zweikreisig und insbesondere als Tandem-Hauptzylinder (THZ) ausgebildet.

Der hydraulische Druck in dem Hauptbremszylinder wird bevorzugt durch einen Druckaufnehmer oder Drucksensor in einer hydraulischen Leitung zwischen dem Hauptbremszylinder und dem Trennventil ermittelt.

Nach einer vorteilhaften Weiterbildung der Erfindung ist es vorgesehen, dass der Druckanstieg überwacht und/oder geregelt wird auf Grundlage eines im wesentlichen ungefilterten Werts für den hydraulischen Druck im Hauptbremszylinder.

Ein "im wesentlichen ungefilterter Wert für den hydraulischen Druck" bedeutet einen gemessenen Druckwert, der nicht durch Bewertung des Druckverlaufs und/oder den Einfluss anderer Größen nachträglich korrigiert oder gewichtet wurde.

Vorzugsweise wird direkt nach dem Übergang der geschlossenen Schaltstellung des Trennventils zu der geöffneten Schaltstellung der hydraulische Druck im Hauptbremszylinder ermittelt und dieser erste, im wesentlichen ungefilterte Wert wird gespeichert.

Es kann weiter vorgesehen sein, dass bei der Sprungfunktion mit anschließender Rampe von einem Haltestrom zuerst sprunghaft ein Stromstärke-Ausgangswert, der im Bereich des einzustellenden Werts liegt, eingestellt wird und dass ausgehend von diesem Stromstärke-Ausgangswert die Stromstärke über eine definierte Rampe auf die einzustellenden Stromstärke geführt wird.

Nach einer vorteilhaften Weiterbildung der Erfindung ist es vorgesehen, dass mittels der Stromstärke-Sprungfunktion ein Solldruck-Ausgangswert eingestellt wird, der oberhalb des eigentlich einzustellenden Drucks, insbesondere in einem Bereich von 20 bar bis 60, vorzugsweise ca. 30 bar, oberhalb des einzustellenden Drucks, liegt. Bei der Regelung wird dazu der Druck als Soll-Wert vorgegeben und entsprechend von meist abgelegten Ventilkennlinien ein Strom eingestellt, welcher mit dem einzustellenden Druck korrespondiert, d.h. der Strom ist eine Funktion des Drucks (I = f (P) bzw. I = f (ΔP)). So kann auch bei unterschiedlichen Ventilkennlinien ein angeforderter Solldruck sicher eingestellt werden.

Es kann weiter vorgesehen sein, dass direkt nach dem Übergang der geschlossenen Schaltstellung des Trennventils zu der geöffneten Schaltstellung der hydraulische Druck im Hauptbremszylinder ermittelt wird und dieser erste, im wesentlichen ungefilterte Wert gespeichert wird, und dass die vorgegebene Funktion für den Übergang der geschlossenen Schaltstellung des Trennventils zu der geöffneten Schaltstellung verändert wird, wenn der aktuelle Wert des im wesentlichen ungefilterten Werts für den hydraulischen Druck im Hauptbremszylinder den ersten, im wesentlichen ungefilterte Wert um einen vorgegebenen Grenzwert übersteigt. Zusätzlich wird vorzugsweise die Rampe verlangsamt, wenn die zeitliche Ableitung, d. h. der Gradient, des im wesentlichen ungefilterten Drucks größer ist als der Wert Null (P-Main > 0).

Dabei kann es vorgesehen sein, dass ein Grenzwert in einem Bereich von 0,1 bar bis 2 bar, insbesondere ca. 0,5 bar, vorgegeben wird.

Bei einer besonders vorteilhaften Weiterbildung der Erfindung ist vorgesehen, dass wenn der aktuelle Wert des im wesentlichen ungefilterten Werts für den hydraulischen Druck im Hauptbremszylinder den ersten, im wesentlichen ungefilterten Wert um einen vorgegebenen Grenzwert übersteigt, die Stromstärke zur Ansteuerung des analogen oder analogisierten Trennventils auf einen modifizierten Stromstärke-Ausgangswert gesetzt wird oder schrittweise auf einen modifizierten Stromstärke-Ausgangswert geführt wird, der größer ist als der Stromstärke-Ausgangswert, und dann ausgehend von diesem modifizierten Stromstärke-Ausgangswert die Stromstärke über eine zweite definierte Rampe auf die einzustellenden Stromstärke geführt wird.

Dabei ist es vorteilhaft vorgesehen, dass durch den modifizierten Stromstärke-Ausgangswert ein modifizierter Druck-Ausgangswert (ΔP + ΔPadd) eingestellt wird, der ca. 20 bar (= ΔPadd) größer ist als der Solldruck-Ausgangswert. Danach wird dann die Stromstärke entsprechend eingestellt (I = f (ΔP + ΔPadd)).

Die Erfindung wird anhand einer Abbildung (Fig.) beispielhaft näher erläutert.

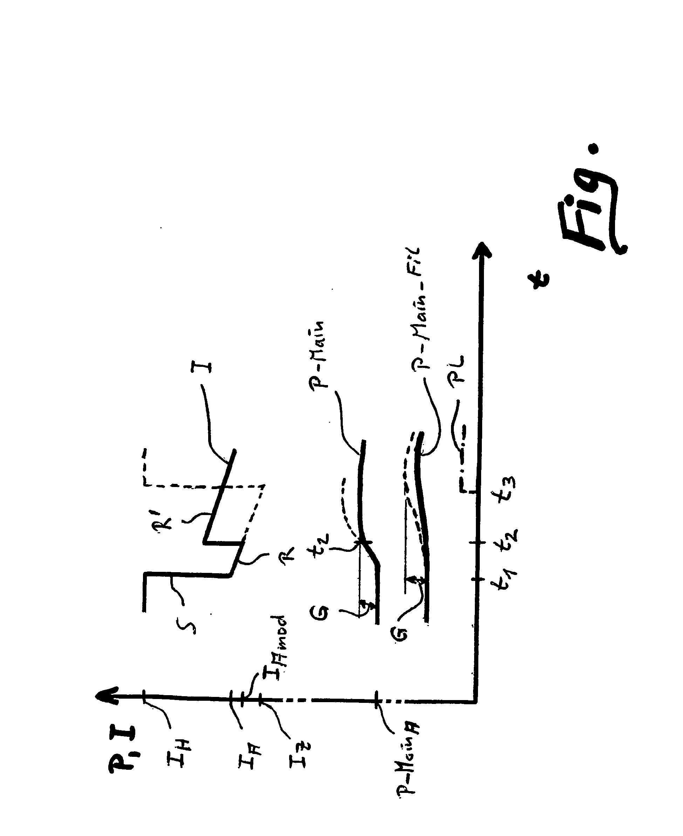

Die Figur zeigt schematische Darstellungen des Verlaufs des hydraulischen Drucks P, insbesondere eines im wesentlichen ungefilterten Drucks P-Main und eines gefilterten Drucks P-Main_Fil sowie korrespondiere Werte für die Stromstärke I zur Steuerung eines Trennventils gegen die Zeit t.
Erfindungsgemäß wird beim Übergang von einer Haltephase mit einem Haltestrom I_{H} (geschlossenes Ventil) in den Druckabbau der im wesentlichen ungefilterte THZ-Druck (P-MAIN) zur Überwachung des Systemverhaltens herangezogen. Die Überwachung des im wesentlichen ungefilterte THZ-Drucks P-MAIN hat den Vorteil, dass ein Druckanstieg detektiert werden kann, bevor der zur Aufbauberechnung herangezogene gefilterte THZ-Druck (P-MAIN_FIL) entsprechende Schwellwerte erreicht, die einen ungerechtfertigten Aufbau einleiten.

Sobald die Druck-Haltephase mit dem Haltestrom I_{H} verlassen wird und auf einen Druck bzw. einen Strom (Stromstärke-Ausgangswert I_{A}) gesprungen wird (Sprung S in der Fig.), der insbesondere ca. 60 bar oberhalb eines einzustellenden Wertes liegt, beginnt ab Zeitpunkt t₁ die erfindungsgemäße Überwachung und Regelung des hydraulischen Drucks im Hauptbremszylinder (durchgezogene Kurven in der Fig.).

Während der Druck entsprechend dem Strom über eine definierte Rampe R auf den Zielwert geführt wird, der dem Strom I_{z} entspricht, wird der im wesentlichen ungefilterte THZ-Druck P-MAIN, der am Anfang der Rampe gemessen wird P-MAIN_{A}, gespeichert. Steigt der im wesentlichen ungefilterte THZ-Druck P-MAIN innerhalb der Stromrampe R um einen Wert, der größer als ein Grenzwert G ist, z.B. größer 0,5 bar ist (Zeitpunkt t₂), dann wird die herunterlaufende Druckrampe bzw. korrespondierende R Strom-Rampe beendet.

Der Druck wird durch den Strom I auf einen modifizierten Druck-Ausgangswert durch den modifizierten Stromstärke-Ausgangswert I_{Amod} Wert gesetzt oder schrittweise geführt, der oberhalb des Solldruck-Ausgangswerts bzw. Stromstärke-Ausgangswert I_{A} liegt, der zu Beginn der Rampe R eingestellt wurde. Ab diesem Zeitpunkt wird wieder die normale Drucksteuerung über die Stromsteuerung mit einer Rampe R' zugelassen.

Es ist vorgesehen, das die Rampe R' gegenüber der Rampe R veränderbar ist. Vorzugsweise wird die Steigung der Rampe R' in Abhängigkeit von der Zeit modifiziert, in welcher der Grenzwert G erreicht bzw. überschritten wurde.

In der Fig. ist auch der Verlauf des gefilterten Drucks P-Main_Fil dargestellt. Es ist aus der Fig. zu erkennen, dass der gefilterte Druckverlauf den schnellen Druckanstieg aufgrund der Ventilansteuerung nicht wiedergibt.

Als gestrichelte Linien sind in der Fig. auch die Verläufe für die Situation dargestellt, wenn das erfindungsgemäße Verfahren nicht durchgeführt wird. In diesem werden die Drücke P-Main und P-Main_Fil stark überhöht. Aber bei Betrachtung des P-Main_Fil wird der Grenzwert G erst zu einem späteren Zeitpunkt t₃ überschritten. Es wird hydraulische Pumpe angesteuert (Pumpenlauf PL), welche den hydraulischen Druck im Hauptbremzylinder veringert. Dies wird für den Fahrer durch ein Wegbewegen des Bremspedals, eine "Wegsaugbewegung", spürbar.

Es ist auch vorgesehen, dass Verfahren nach der Erfindung unabhängig vom Grund des Druckanstiegs P-MAIN anzuwenden. Es kann auch eine Druckerhöhung durch den Fahrer eine erfindungsgemäße Steuerung rechtfertigen. Durch die schnelle Beendung des ungerechtfertigt großen Druckabbaus ist auch eine verbesserte Fahrerwunscherkennung gegeben. Denn die Überlagerung des im wesentlichen ungefilterten THZ-Drucks P-MAIN und des gefilterten THZ-Drucks P-MAIN_FIL wird verringert (siehe Fig.).

## Patentansprüche

1. Verfahren zur Verbesserung des Betriebs eines hydraulischen Fahrzeugbremssystems mit einer aktiven hydraulischen Bremskraftunterstützung, die zwischen einem Trennventil und Radbremsen des Fahrzeugs an einer Verbindung zwischen einem Hauptbremszylinder und den Radbremsen angeschlossen ist, wobei ein Druckmittel-Volumenstrom zwischen dem Hauptbremszylinder und den Radbremsen mit einem analogen oder analogisierten Trennventils geregelt wird und ein hydraulischer Druck in dem Hauptbremszylinder ermittelt wird, wobei bei einem Übergang einer Druckaufbau-Schaltstellung, das heißt einer geschlossenen Schaltstellung, des Trennventils zu einer Druckabbau-Schaltstellung, das heißt einer geöffneten Schaltstellung, ein Anstieg des hydraulischen Drucks in dem Hauptbremszylinder auf Grundlage des ermittelten hydraulischen Drucks in dem Hauptbremszylinder überwacht und/oder geregelt wird, **dadurch gekennzeichnet, dass** der Übergang der geschlossenen Schaltstellung des Trennventils zu der geöffneten Schaltstellung nach einer vorgegebenen Funktion erfolgt, die nach Maßgabe eines im wesentlichen ungefilterten Werts für den hydraulischen Druck im Hauptbremszylinder veränderbar ist, wobei die vorgegebene Funktion für den Übergang der geschlossenen Schaltstellung des Trennventils zu der geöffneten Schaltstellung eine Sprungfunktion mit anschließender Rampe ist, mittels der die Stromstärke zur Ansteuerung des analogen oder analogisierten Trennventils gesteuert wird.

2. Verfahren nach Anspruch 1, **dadurch gekennzeichnet, dass** der Druckanstieg auf Grundlage eines im wesentlichen ungefilterten Werts für den hydraulischen Druck im Hauptbremszylinder überwacht und/oder geregelt wird

3. Verfahren nach Anspruch 1 oder 2, **dadurch gekennzeichnet, dass** direkt nach dem Übergang der geschlossenen Schaltstellung des Trennventils zu der geöffneten Schaltstellung der hydraulische Druck im Hauptbremszylinder ermittelt wird und dieser erste, im wesentlichen ungefilterte Wert gespeichert wird.

4. Verfahren nach einem der Ansprüche 1 bis 3, **dadurch gekennzeichnet, dass** bei der Sprungfunktion mit anschließender Rampe von einem Haltestrom zuerst sprunghaft ein Stromstärke-Ausgangswert, der im Bereich des einzustellenden Werts liegt, eingestellt wird und dass ausgehend von diesem Stromstärke-Ausgangswert die Stromstärke über eine definierte Rampe auf die einzustellenden Stromstärke geführt wird.

5. Verfahren nach Anspruch 4, **dadurch gekennzeichnet, dass** mittels der Stromstärke-Sprungfunktion ein Solldruck-Ausgangswert eingestellt wird, der oberhalb des eigentlich einzustellenden Drucks, insbesondere in einem Bereich von 20 bar bis 60, vorzugsweise ca. 30 bar, oberhalb des einzustellenden Drucks, liegt.

6. Verfahren nach einem der vorhergehenden Ansprüche, **dadurch gekennzeichnet, dass** direkt nach dem Übergang der geschlossenen Schaltstellung des Trennventils zu der geöffneten Schaltstellung der hydraulische Druck im Hauptbremszylinder ermittelt wird und dieser erste, im wesentlichen ungefilterte Wert gespeichert wird, dass die vorgegebene Funktion für den Übergang der geschlossenen Schaltstellung des Trennventils zu der geöffneten Schaltstellung verändert wird, wenn der aktuelle Wert des im wesentlichen ungefilterten Werts für den hydraulischen Druck im Hauptbremszylinder den ersten, im wesentlichen ungefilterte Wert um einen vorgegebenen Grenzwert übersteigt, und dass die Rampe verlangsamt wird, wenn der Gradient für den Wert des im wesentlichen ungefilterten Drucks größer 0 ist.

7. Verfahren nach Anspruch 6, **dadurch gekennzeichnet, dass** ein Grenzwert in einem Bereich von 0,1 bar bis 2 bar, insbesondere ca. 0,5 bar, vorgegeben wird.

8. Verfahren nach Anspruch 6 oder 7, **dadurch gekennzeichnet, dass** wenn der aktuelle Wert des im wesentlichen ungefilterten Werts für den hydraulischen Druck im Hauptbremszylinder den ersten, im wesentlichen ungefilterten Wert um einen vorgegebenen Grenzwert übersteigt, die Stromstärke zur Ansteuerung des analogen oder analogisierten Trennventils auf einen modifizierten Stromstärke-Ausgangswert gesetzt wird oder schrittweise auf einen modifizierten Stromstärke-Ausgangswert geführt wird, der größer ist als der Stromstärke-Ausgangswert, und dann ausgehend von diesem modifizierten Stromstärke-Ausgangswert die Stromstärke über eine zweite definierte Rampe auf die einzustellenden Stromstärke geführt wird.

9. Verfahren nach Anspruch 8, **dadurch gekennzeichnet, dass** durch den modifizierten Stromstärke-Ausgangswert ein modifizierter Druck-Ausgangswert eingestellt wird, der ca. 20 bar größer ist als der Solldruck-Ausgangswert.

## Claims

1. Method for improving the operation of a hydraulic vehicle brake system with active hydraulic brake boosting, which is arranged between a separating valve and wheel brakes of the vehicle at a connection between a master brake cylinder and the wheel brakes, wherein a pressure fluid volume flow between the master brake cylinder and the wheel brakes is controlled by means of an analog or analogized separating valve and a hydraulic pressure is determined in the master brake cylinder, wherein in a transition from a pressure increase switch position, that means a closed switch position of the separating valve to a pressure reduction switch position, that means an open switch position, an increase of the hydraulic pressure in the master brake cylinder is monitored and/or controlled on the basis of the hydraulic pressure determined in the master brake cylinder,
**characterized in that** the transition from the closed switch position of the separating valve to the open switch position takes place according to a predetermined function being variable in accordance with a substantially unfiltered value for the hydraulic pressure in the master brake cylinder, and the predetermined function for the transition from the closed switch position of the separating valve to the open switch position is a jump function with an adjacent ramp, by means of which the current strength for actuation of the analog or analogized separating valve is controlled.

2. Method as claimed in claim 1,
**characterized in that** the pressure rise is monitored and/or controlled on the basis of a substantially unfiltered value for the hydraulic pressure in the master brake cylinder.

3. Method as claimed in claim 1 or 2,
**characterized in that** the hydraulic pressure in the master brake cylinder is determined directly after the transition from the closed switch position of the separating valve to the open switch position, and this first, substantially unfiltered value is stored.

4. Method as claimed in any one of claims 1 to 3,
**characterized in that** in the jump function with adjacent ramp, initially a holding current abruptly adjusts a current strength basic value lying in the range of the value to be adjusted, and **in that** based on this current strength basic value, the current strength is led by way of a defined ramp to the current strength to be adjusted.

5. Method as claimed in claim 4,
**characterized in that** the current strength jump function is used to adjust a nominal pressure basic value which lies above the pressure to be actually adjusted, in particular in a range of 20 bar to 60 bar, preferably about 30 bar, above the pressure to be adjusted.

6. Method as claimed in any one of the preceding claims,
**characterized in that** the hydraulic pressure in the master brake cylinder is determined directly after the transition from the closed switch position of the separating valve to the open switch position, and this first, substantially unfiltered value is stored, **in that** the predetermined function for the transition from the closed switch position of the separating valve to the open switch position is changed when the current value of the substantially unfiltered value for the hydraulic pressure in the master brake cylinder exceeds the first, substantially unfiltered value by a predetermined limit value, and **in that** the ramp is retarded when the gradient for the value of the substantially unfiltered pressure exceeds zero.

7. Method as claimed in claim 6,
**characterized in that** a limit value is predetermined in a range of 0.1 to 2 bar, in particular approximately 0.5 bar.

8. Method as claimed in claim 6 or 7,
**characterized in that** when the present value of the substantially unfiltered value for the hydraulic pressure in the master brake cylinder exceeds the first, substantially unfiltered value by a predetermined limit value, the current strength for the actuation of the analog or analogized separating valve is set to a modified current strength basic value or is gradually led to a modified current strength basic value which exceeds the current strength basic value, and then the current strength is led by way of a defined ramp to the current strength to be adjusted based on this modified current strength basic value.

9. Method as claimed in claim 8,
**characterized in that** the modified current strength basic value is used to adjust a modified basic pressure value that is by approximately 20 bar higher than the basic value of the nominal pressure.

## Revendications

1. Procédé pour améliorer le fonctionnement d'un système hydraulique de freinage de véhicule avec une assistance hydraulique active de la force de freinage qui est raccordée entre une soupape de séparation et les freins des roues du véhicule à une liaison entre un cylindre de frein principal et les freins des roues, un flux volumique de fluide sous pression étant régulé entre le cylindre de frein principal et les freins des roues au moyen d'une soupape de séparation analogique ou convertie analogique, et une pression hydraulique étant déterminée dans le cylindre de frein principal, une montée de la pression hydraulique dans le cylindre de frein principal étant surveillée et/ou régulée sur la base de la pression hydraulique déterminée dans le cylindre de frein principal, lors du passage d'une position de commutation de montée en pression, c'est-à-dire d'une position de commutation fermée de la soupape de séparation, à une position de commutation de réduction de la pression, c'est-à-dire à une position de commutation ouverte, **caractérisé en ce que** le passage de la position de commutation fermée de la soupape de séparation à la position de commutation ouverte s'effectue suivant une fonction prédéfinie qui peut varier suivant une valeur sensiblement non filtrée de la pression hydraulique dans le cylindre de frein principal, la fonction prédéfinie pour le passage de la position de commutation fermée de la soupape de séparation à la position de commutation ouverte étant une fonction de saut avec rampe consécutive, au moyen de laquelle l'intensité du courant est commandée pour commander la soupape de séparation analogique ou convertie analogique.

2. Procédé selon la revendication 1, **caractérisé en ce que** la montée en pression est surveillée et/ou régulée sur la base d'une valeur sensiblement non filtrée de la pression hydraulique dans le cylindre de frein principal.

3. Procédé selon la revendication 1 ou 2, **caractérisé en ce que** directement après le passage de la position de commutation fermée de la soupape de séparation à la position de commutation ouverte, la pression hydraulique est déterminée dans le cylindre de frein principal et cette première valeur, sensiblement non filtrée, est mémorisée.

4. Procédé selon l'une des revendications 1 à 3, **caractérisé en ce que** pour la fonction de saut avec rampe consécutive il est réglé d'abord de manière brusque, depuis un courant de maintien, une valeur initiale de l'intensité, qui se situe dans le domaine de la valeur à régler, et **en ce que**, partant de cette valeur initiale de l'intensité, l'intensité est amenée, par une rampe définie, à l'intensité à régler.

5. Procédé selon la revendication 4, **caractérisé en ce qu'**au moyen de la fonction à saut de l'intensité il est réglé une valeur initiale de la pression de consigne qui se situe au-dessus de la pression à régler réellement, en particulier entre 20 bars et 60 bars, de préférence à environ 30 bars au-dessus de la pression à régler.

6. Procédé selon l'une des revendications précédentes, **caractérisé en ce que** directement après le passage de la position de commutation fermée de la soupape de séparation à la position de commutation ouverte, la pression hydraulique dans le cylindre de frein principal est déterminée et cette première valeur sensiblement non filtrée est mémorisée, **en ce que** la fonction prédéfinie pour le passage de la position de commutation fermée de la soupape de séparation à la position de commutation ouverte est modifiée lorsque la valeur actuelle de la valeur sensiblement non filtrée de la pression hydraulique dans le cylindre de frein principal dépasse la première valeur, sensiblement non filtrée, d'une valeur limite prédéfinie, et **en ce que** la rampe est ralentie si le gradient de la valeur de la pression sensiblement non filtrée est supérieur à 0.

7. Procédé selon la revendication 6, **caractérisé en ce qu'**une valeur limite comprise entre 0,1 bar et 2 bars, en particulier égale à environ 0,5 bar, est prédéfinie.

8. Procédé selon la revendication 6 ou 7, **caractérisé en ce que** si la valeur actuelle de la valeur sensiblement non filtrée de la pression hydraulique dans le cylindre de frein principal dépasse la première valeur, sensiblement non filtrée, d'une valeur limite prédéfinie, l'intensité du courant est placée sur une valeur initiale d'intensité modifiée, pour commander la soupape de séparation analogique ou convertie analogique, ou est guidée pas à pas jusqu'à une valeur initiale modifiée de l'intensité qui est supérieure à la valeur initiale de l'intensité, puis, partant de cette valeur initiale modifiée de l'intensité, l'intensité est guidée sur une deuxième rampe définie jusqu'à l'intensité à régler.

9. Procédé selon la revendication 8, **caractérisé en ce que** par la valeur initiale modifiée de l'intensité est réglée une valeur initiale modifiée de la pression qui est d'environ 20 bars supérieure à la valeur initiale de la pression de consigne.
